(19) **Europäisches Patentamt**

**European Patent Office**

**Office européen des brevets**

(11) **EP 1 102 512 A1**

(12) **EUROPEAN PATENT APPLICATION**

(43) Date of publication:
23.05.2001 Bulletin 2001/21

(51) Int Cl.7: **H04Q 7/38**

(21) Application number: **99440324.4**

(22) Date of filing: **19.11.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **ALCATEL**<br>**75008 Paris (FR)**<br><br>(72) Inventors:<br>• **de Hoz Garcia-Belloido, Alejandro**<br>**92100 Boulogne-Billancourt (FR)** | • **Fratti, Marco**<br>**78100 St Germain en Laye (FR)**<br><br>(74) Representative: **Scheer, Luc et al**<br>**ALCATEL,**<br>**Intellectual Property Department,**<br>**Postfach 300 929**<br>**70449 Stuttgart (DE)** |

(54) **A method of selecting a transmission resource of a multiple access channel, a terminal, a fixed station and a fixed station controller implementing the method**

(57) The invention relates specifically to a method of selecting a transmission resource of a multiple access channel, the channel being shared between terminals (12, 13, 14, 40) for gaining access to a fixed station (10, 11, 50). In order to gain access to the fixed station (10, 11, 50), selection consists in using a transmission resource that has at least one component which corresponds unambiguously with a useful item of information (UI) for transmission to the fixed station (10, 11, 50).

FiG.1

**Description**

The field of the invention is that of data transmission, e.g. by radio in a cellular telecommunications system. More precisely, the present invention relates in particular to a method of selecting a transmission resource of a multiple access channel, the transmission channel being shared between a plurality of terminals to access a fixed station.

By way of concrete example, the description below relates specifically to the context of a code division multiple access (CDMA) type cellular telecommunications system, the system comprising fixed stations and terminals, e.g. mobile terminals.

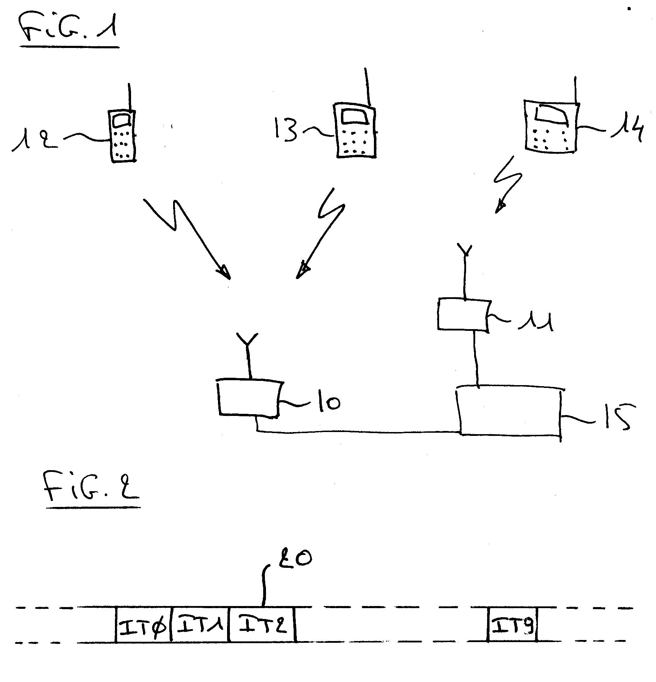

Figure 1 shows part of such a system. A cellular telecommunications system conventionally comprises a plurality of fixed stations (referred to as "B nodes" in UMTS terminology), each fixed station being capable of entering into communication with the terminals situated around it. Two fixed stations 10, 11 and three terminals 12, 13, and 14 are shown here. The fixed stations are connected to a radio network controller (RNC) 15. In operation, each of the fixed stations broadcasts a pilot signal on a pilot channel, which signal is received by the terminals to be found in the cell constituted by the coverage zone of the fixed station. The pilot signal has, in particular, the function of enabling terminals to enter into time synchronization with the fixed station. In order to request call setup, the terminals transmit a connection request to the fixed station. These transmissions constitute access requests that are performed over a multiple access channel commonly known as a "random access channel" (RACH), i.e. all of the terminals use the same channel for requesting call setup (which channel thus constitutes a channel that is shared between the terminals).

In conventional manner, using the example of a multiple access channel constituted by a frame subdivided into ten time slots (such as the frame 20 shown in Figure 2) and transmitted on a single carrier frequency, each terminal seeking to set up a call with the fixed station transmits a code to the fixed station, said code being carried in a time slot. In each terminal, the time slot and the code are selected in totally random manner. When two terminals use the same time slot and the same code to access the fixed station, then the transmitted messages collide and the fixed station cannot identify the call setup requests. Providing the codes used are mutually orthogonal, i.e. have optimum cross-correlation properties, the fixed station can distinguish between call setup requests formulated during the same time slot, but by different terminals. Naturally, such distinction can also be achieved when the time slots used by the terminals are different, and regardless of whether or not the codes are identical.

By considering each time slot and each code to be a transmission resource, it can be seen that each terminal has two degrees of freedom for selecting the resource used for access purposes. If the number of available time slots is ten and the number of codes is likewise ten, then 100 different resources are available to each terminal seeking to set up a call.

If the number of carrier frequencies included in the multiple access channel is greater than one, than a third degree of freedom is available to the terminals (i.e. selecting a carrier frequency). The number of available resources is then multiplied by the number of carrier frequencies included in the multiple access channel.

In the above method, the fixed station which receives a call setup request from a terminal and without collision responds by sending an acknowledge message to the terminal informing it that its request has been received. If the terminal does not receive the acknowledge message within a predetermined length of time, it assumes that its request has not been properly received by the fixed station (very likely because its request has collided with another request), and it makes the request again after a random period.

Thus the RACH uses a combination of time and code multiplexing to allow many terminals to access the same B node without collision. To access a B node, each terminal chooses arbitrarily both a time slot and a code from a set of time slots and from a set of codes. If that combination of time slot and code is not in use by any other terminal seeking to access the B node, then the access procedure is successful. Since this code and this time slot are chosen arbitrarily, each "time slot and code" pair occurs with the same likelihood.

A problem inherent to a procedure of that type is described below, still with reference to a CDMA type transmission network by way of example.

In CDMA systems, capacity is interference driven. This means that the maximum number of terminals that can be accepted by a fixed station at a given time depends more on the total interference level generated in the system than it does on hardware limitations. This makes call admission control (CAC) procedures a critical part of radio resource management. Call admission control is a procedure performed at RNC level when receiving a call setup request from a terminal. The purpose of this procedure is to enable or refuse the setting up of a call with a requesting terminal. Since CAC relies on the interference level of the system, system parameters must be measured in order to support the algorithms used by CAC. The reliability of the CAC procedure depends on the capacity of the system to evaluate those parameters.

One of the critical parameters in CAC algorithms concerning the downlink is the initial position of a terminal that is to be admitted. While the distance between the fixed station and terminals that are already communicating with that fixed station can be determined by methods which report measured power levels or power level ratios, or signal-to-noise ratios, no such mechanism is provided for a terminal while it is requesting call setup.

The problem to be solved in a CDMA system is to find a mechanism that allows the RNC to obtain information about the distance between the B node and the terminal requesting call setup prior to granting that setup.

In the prior art, no solution exists to solve that problem, which explains why all CAC algorithms for the downlink rely on estimated average power requirements for a new terminal. The averaging process must have large safety margins in order to ensure system stability, and that has a considerable impact on maximum capacity.

To avoid instabilities in the system, the margins have to take account of some probability for a worst case situation. In W-CDMA, the downlink power requirements for a new terminal depend very strongly on the distance between the cell border and the B node. This is due to several factors (distance attenuation, interference experienced from surrounding B nodes) accumulating with the same tendency: the greater the distance the worse their influence.

This means that to ensure stability, large margins are needed relative to average power requirements. However, when the distance between a new terminal and the B node is short, then the power requirement drops dramatically. Since the B node cannot be aware of this, many call setup requests are rejected in order to avoid system instability, even if setting up those calls would not have a major impact on system performance. In terms of number of simultaneous terminals, this situation constitutes a major drawback of the system.

A similar problem arises in any system where terminals share a channel for access to a fixed station, the absence of an already-established call with the fixed station making it impossible to transmit useful information to the fixed station, e.g. such as power level received by the fixed station, noise level measured at the terminal, transmitter power level used by the terminal to achieve access on the shared channel, or even the identity of the mobile station (MSID), even though such information could be used with advantage by the fixed station in deciding whether or not to set up a call (CAC), or could even be of use merely in that having knowledge of such information prior to setting up the call makes it possible to omit transmitting the information after the call has been set up.

According to the invention, this object is achieved by a terminal seeking access to the fixed station over the shared channel selecting a transmission resource in which at least one of the components corresponds unambiguously with information that it is useful to transmit to the fixed station. The term "transmission resource" is used to designate a resource of the multiple access channel, said resource comprising at least two components. Possible components are those used in transmission systems of TDMA type (time division), CDMA type (code division), and FDMA type (frequency division). Thus, a transmission resource can be constituted by one or more time slots transmitted on a single carrier frequency, the time slot(s) and the carrier frequency constituting the components of the transmission resource. Another example is a code transmitted on a carrier frequency. Yet another example is a code transmitted in a time slot on a given carrier frequency.

In the context of the present invention, it is necessary that each resource used can be distinguished by the fixed station from any other resource providing at least one of its components differs from the components formed by said other resource.

Preferably, at least one of the components of the resource is determined in random manner by the terminal.

The components of a given resource are advantageously mutually orthogonal.

In a preferred application, the information that it is useful to transmit to the fixed station corresponds to the power level of a pilot signal as received by the terminal from the fixed station. Under such circumstances, and in order to limit the risk of collision on the multiple access channel, the component corresponding unambiguously with the useful information for transmitting to the fixed station is advantageously selected from a list which is established with reference to the dynamic range of the pilot signal in such a manner as to minimize the risk of collision on the multiple access channel.

The invention also provides a terminal including selector apparatus for selecting a transmission resource of a multiple access channel, the channel being shared between terminals for gaining access to a fixed station, the selector apparatus being suitable for selecting a resource having at least two components in order to gain access to the fixed station, the resource being distinguishable from another resource by the fixed station when at least one of its components differs from those used by the other resource, the selector apparatus selecting a resource in which at least one of the components corresponds unambiguously with a useful item of information to be transmitted to the fixed station, the useful item of information being applied to the selector apparatus.

Preferably, the useful item of information for transmission to the fixed station corresponds to the power level at which the terminal receives a pilot signal from the fixed station.

The invention also provides a fixed station of a communications network, the fixed station being suitable for receiving signals transmitted by terminals over a multiple access channel, the channel being shared between a plurality of terminals for access to the fixed station, said fixed station including a member for associating the resource used by each of the terminals for accessing the fixed station with a corresponding useful item of information.

The invention also provides a radio network controller of fixed stations in a cellular telecommunications network, said fixed stations being designed to enter into communication with terminals, said controller including a member for associating the resource used by each of the terminals for gaining access to one of the fixed stations with a corresponding useful item of information.

Other characteristics and advantages of the invention will appear on reading the following description of a preferred implementation, given by way of non-limiting illustration, and from the accompanying drawings, in which:

- Figure 1 shows a CDMA type cellular transmission network;
- Figure 2 is a diagram of a multiple access channel constituted by a frame subdivided into time slots;
- Figure 3 is a table showing an example of resources used for transmitting twenty-four different useful items of information;
- Figure 4 is a block diagram of a terminal including apparatus for selecting a transmission resource of a multiple access channel;
- Figure 5 is a block diagram of an embodiment of a fixed station in accordance with the present invention; and
- Figure 6 shows an embodiment of the RNC in accordance with the present invention.

Figures 1 and 2 are described above with reference to the state of the art.

The present invention is based on the concept that the transmission resource selected for use by a terminal to gain access to a fixed station is not performed in random manner as in the state of the art, but that the resource used corresponds unambiguously with a "useful" item of information for transmission to the fixed station. The invention thus consists, in the context of a call setup request, of "grafting" an item of information onto the request which is transmitted to the fixed station.

In general, any multiple access channel is constituted by a set of resources that can be used by terminals to gain access to a fixed station: by way of example, the multiple access channel can be constituted merely by frames subdivided into time slots, said frames being transmitted on a single carrier frequency. The time slots and the carrier frequency constitute the components of these resources. Under such circumstances, each resource available for accessing the fixed station is constituted by a pair comprising said carrier frequency and a time slot of the frame. The number of pairs is equal to the number of time slots in the frame and each pair differs from the others by the position of its time slot.

In another configuration, the multiple access channel has time slots in frames conveyed on a plurality of carrier frequencies. Under such circumstances, the number of available resources is equal to the number of time slots multiplied by the number of carrier frequencies.

In another configuration, the multiple access channel is constituted by a single carrier frequency conveying time slots in a frame, and each terminal is capable of transmitting a code selected from a predetermined list in any one of the time slots. This configuration corresponds to that used for a W-CDMA type cellular transmission network in the context of UTRA-FDD (terrestrial portion of the third generation of mobile radiocommunications systems). In which case, the number of possible pairs is equal to the number of different codes multiplied by the number of time slots of the frame. The codes used are preferably mutually orthogonal, i.e. they present good cross-correlation properties.

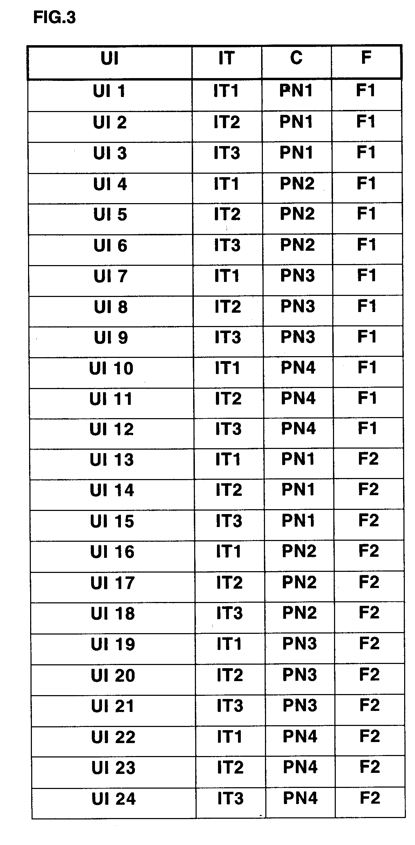

In accordance with the invention, a code and a time slot are preferably selected from a table of the kind shown in Figure 3.

Figure 3 is a table showing an example of resources usable for transmitting one useful item of information from a list of twenty-four to the fixed station.

In this case, it is assumed that the multiple access channel has three time slots IT1 to IT3, that four different codes C1 to C4 can be used, and that two carrier frequencies F1 and F2 are available in the shared access channel. The number of different resources thus made available to each terminal is $3\times4\times2$, i.e. 24.

As mentioned above, each different useful item of information UI to be transmitted is allocated unambiguously to a respective one of these resources. In this example, if useful item UI7 is to be transmitted to the fixed station, then code C3 is transmitted in time slot IT1 at frequency F1. If useful item UI14 is to be transmitted to the fixed station, then code C1 is transmitted in time slot IT2 at frequency F2. It can thus be seen that an unambiguous relationship does indeed exist between the resources used for gaining access to the shared access channel and the useful item of information that is to be transmitted.

Naturally, the greater the number of resources, the larger the quantity of different useful items of information that can be transmitted. This quantity also increases with the number of components in each resource.

In the context of a preferred application relating to CDMA type transmission networks, the useful item of information that is transmitted from a terminal to the fixed station corresponds to the power level at which the terminal receives a pilot signal transmitted by the fixed station. As mentioned above, this pilot signal is broadcast by the fixed station over the pilot channel. If two different terminals that are not using the same resources of the RACH channel to access the fixed station (i.e. are not receiving substantially the same power level from said fixed station), then the fixed station will not only receive the call setup request, it will also know the power level of the pilot signal as received by said terminal. This received power level is a measure of the distance between the terminal and the fixed station. On the basis of this information, the fixed station or the RNC connected to said fixed station can estimate accurately whether or not a call can be set up with the terminal, i.e. it can perform the CAC procedure. It is also possible to transmit a value for the signal-to-noise ratio to the fixed station, said value likewise being representative of the position of the terminal relative to the fixed station, and thus of the power that is required from said fixed station in order to set up a call with the terminal.

By estimating the power requirements of the candidate terminal with a certain amount of accuracy (the pilot signal power received by the terminal is representative of the downlink pathloss), the CAC algorithms do not need to rely on average values plus added safety margins. This considerably increases the number of terminals that can communicate simultaneously with a fixed station, with this being achieved by allowing the fixed station to approach its maximum capacity more often.

In the context of another application, the useful item of information transmitted to the fixed station corresponds to the position of the terminal as determined by the terminal itself. Position determination can be performed, for example, by triangulation (using signals broadcast by two other base stations), by the global positioning system (GPS), or by any other known means enabling a terminal to determine its own position. By way of example, the position of a terminal can be determined at the fixed station on the basis of a useful item of information corresponding to a plurality of pilot signal power levels received from a plurality of fixed stations. On the basis of knowledge concerning its own position and of the useful item of information transmitted thereto, the fixed station can estimate accurately the distance between itself and the terminal.

In the context of another application, the useful item of information transmitted to the fixed station corresponds to the identity of the terminal (MSID). Under such circumstances, it is possible to set up a call with a priority terminal, perhaps requiring other calls already in progress with terminals of lower priority to be discontinued or interrupted so as to enable the priority call to be set up.

In the context of another application, the useful item of information transmitted to the fixed station corresponds to the power level used by the terminal to make its own call request. This gives the fixed station an indication of uplink attenuation or pathloss.

The person skilled in the art will readily be able to devise other applications for the present invention, i.e. what particular useful item of information it is desirable or even necessary to transmit over a shared access channel to a fixed station prior to setting up a genuine call with a terminal, e.g. a mobile terminal.

In the context of the present invention, is it nevertheless preferable to conserve random selection for at least one of the components of the resource used so as to avoid ossifying the system completely. In the event of terminal users being concentrated in a small space (high potential density of users), if no degree of freedom is left in selecting which resource to use, then all of the user terminals will receive the same level of power from the best-received fixed station and they will all select the same resource for accessing said fixed station. Call setup requests will therefore suffer congestion and many users will be prevented from setting up a call. Such a problem can typically arise in an opera, a cinema, or an airport bus carrying travelers to an airplane. To remedy that drawback, the invention proposes selecting a resource having not only at least one component which corresponds unambiguously with a useful item of information for transmission to the fixed station, but also having at least one component which is determined in random manner. By way of example, for a multiple access channel having a single carrier frequency, the code that is used can be selected in random manner while the time slot is selected in deterministic manner, i.e. as a function of the useful item of information for transmission to the fixed station. A dual solution consists in providing for code selection to be deterministic while time slot selection is random. Another solution consists in selecting both code and time slot in deterministic manner while the frame in which the code is inserted in the time slot in question is itself selected randomly (for a repetitive frame).

The term "code" is used to designate a digital signal at a bit frequency or at a chip frequency. A digital signal at bit frequency corresponds merely to a stream of bits of predetermined values. A digital signal at chip frequency corresponds to a stream of bits of predetermined values (e.g. a stream of logic 1 levels) that have been frequency spread by a spreading sequence, itself also known. In the UTRA-FDD application, the code transmitted corresponds to a chip sequence. The various sequences available for access to the fixed station are preferably mutually orthogonal.

In a preferred implementation of the method of the invention as applied to transmitting a useful item of information relating to the power level of the received power signal, the table that defines correspondence between the useful item of information for transmission and the resource components used for performing the transmission is itself regularly updated by information supplied by the fixed station so as to minimize the risk of collision on the multiple access channel. In the state of the art, the risk of collision is minimized by selecting the resources used for accessing the fixed station in a manner that is completely random. However, in the context of the present invention, the risk of collision increases if no account is taken of the dynamic range of the pilot signal received by terminals in communication with the fixed station. To this end, the invention proposes not only providing a deterministic aspect in the selection of the resources used for accessing the fixed station, but also conserving the same probability of a uniform distribution of the resources used during such access as is obtained when the resource is selected entirely randomly.

This object is achieved by each terminal selecting at least one component corresponding unambiguously with the useful item of information for transmission to the fixed station, said component being selected from a list which is drawn up while taking account of the dynamic range of the pilot signal. This amounts to generating at least one of the columns IT, C, and F in Figure 3 from the dynamic range of said pilot signal. One possible way of operating is as follows:

- Firstly, the most likely upper and lower limits of the distance-related measurement values for transmission to the fixed station must be established on the basis of all possible situations for a new terminal in the cell; these limits must be known both to the network and to the terminal, and they should be broadcast periodically as part of the "system information". In practice, the most likely lower limit corresponds to zero (the terminal is at the foot of the fixed station) and thus the power received by the terminal is approximately equal to the power with which the pilot signal is broadcast by the fixed station. The most likely upper limit corresponds to the power received by a terminal at the border of the cell, i.e. the received pilot signal power corresponds to the minimum power which will be used by that terminal for communicating with that fixed station.
- Secondly, the difference between the upper and lower limits is subdivided into a number of intervals N, where N is the number of different "time slot and code and frequency" combinations available in the RACH. The intervals are chosen in such a manner that, given the distribution expected for new terminals in the cell, the probability of a measurement for transmission to the fixed station lying in any given interval is the same for each interval. Under such circumstances, the particular "time slot and code and frequency" combination selected at the terminal automatically gives the fixed station implicit knowledge concerning the distance-related measurement as performed by the terminal, while preserving the prior art probability for collision within the RACH due to the intervals being equally probable.

As already mentioned, correspondence between interval values and "time slot and code and frequency" combinations must be known both to the terminals and to the B node. That is why the fixed station broadcasts the following to all terminals present in its cell:

- correspondence between the useful item of information to be transmitted and the resource to be used for transmitting the useful information; or
- the dynamic range of the pilot signal, each terminal itself generating its own correspondence table (Figure 3) with the fixed station doing the same.

The concept explained above is valid in particular for any CDMA system. In a preferred embodiment (referred to as UTRA-FDD at the present stage of standardization), the random characteristic of the RACH is given by:

- a time offset (an integer $k$ multiple of 1.25 ms, where $k$ is less than or equal to 8) relative to the frame time origin. This parameter is not well suited for reporting measurements because it is time-variable;
- a "preamble signature" (sixteen possible values); and
- a 16-bit radio network temporary identifier (RNTI), 8 bits can be chosen randomly by the terminal for its RNTI number, with the other 8 bits being chosen by the network. Normally the RNTI is used for transmitting asynchronous packet data on common channels. RNTI is performed at layer 1 (i.e. MAC); the goal of the RNTI is to multiplex and demultiplex various users on common channels. However, the randomness characteristic of RNTI is well suited for use in RACH applications in the context of the present invention.

It turns out that the distance-related measurement performed by the terminal for transmission to the network (B node or RNC) can be quantized (between lower and upper limits) as a number of intervals N given by:

$$N = \text{Signature\_Number} * \text{RNTI}_{\text{Terminal}} = 16*256 = 4096$$

The present invention does not require changes in transport channel formats or in layer 1 aspects of the standard; however a specific field must be provided in the system information message for the purpose of broadcasting the lower and upper limits of the distance-related measurement.

The components of a given resource are preferably mutually orthogonal. Such orthogonality is implicit at time slot level. At code level, it can be provided by Hadamard sequences, and the available frequencies satisfy the criteria used in OFDM transmission.

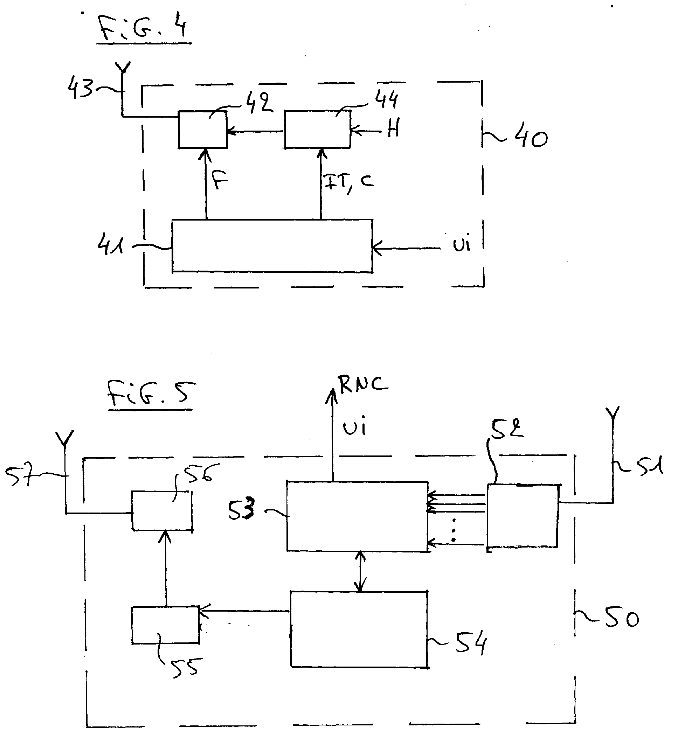

The invention also relates to a terminal including apparatus for selecting a transmission resource of a multiple access channel, as shown diagrammatically in Figure 4.

The terminal of Figure 4, given overall reference 40, includes selection apparatus 41 whose function is to select a transmission resource for accessing the shared channel RACH. As mentioned above, this resource has at least two components. In the embodiment shown, the selection apparatus 41 delivers a carrier frequency F to a modulator 42 which is connected to a transmission antenna 43. At the input to the modulator 42, there is applied a code C lying in a time slot IT of a frame defined relative to a clock signal H. The clock signal H is obtained by demodulating the pilot signal as transmitted by the fixed station and it enables the terminal to know exactly when each frame of the channel RACH begins and ends. The block 44 receiving the time slot number I2, the code C, and the clock signal H is a frame builder whose output signal is applied to the modulator 42.

The code C, the time slot IT, and the frequency F used for accessing the channel RACH are selected as a function of the useful item of information UI for transmission to the fixed station. This useful item of information is applied to the selector apparatus 41. In one of the above-described implementations, the useful item of information UI corresponds to the power level of the pilot signal as received by the fixed station. The selector apparatus 41 has a table of the type shown in Figure 3 for associating the useful item of information for communicating to the fixed station with the resource that is to be used for accessing said fixed station.

The selector apparatus 41 can be constituted merely by a table of the kind shown in Figure 3.

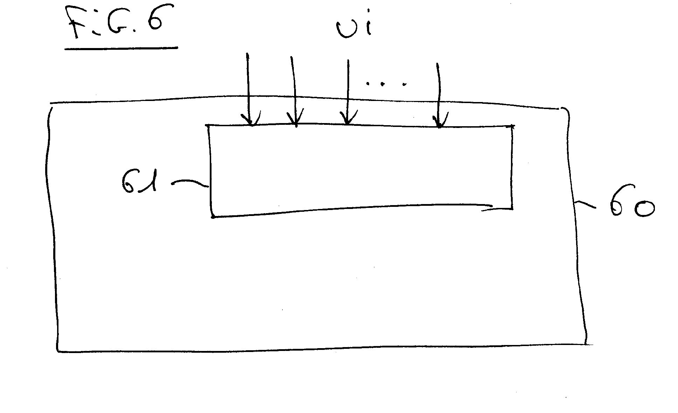

The invention also relates to a fixed station in a communications network, as shown in Figure 5. Figure 5 is a block diagram of a fixed station 50 (B node) in accordance with the present invention.

The fixed station 50 has a receive antenna 51 supplying received signals to a module 52 for receiving access requests issued on the channel RACH. The module 52 has a plurality of outputs since a plurality of access requests can be received simultaneously by the fixed station 50. The outputs from the module 52 are applied to a member 53 for associating the resource used by each terminal when accessing the fixed station with a corresponding useful item of information UI. This association member 53 has a table identical to that contained in the apparatus 41 of Figure 4, and it supplies the RNC with the useful item of information UI as extracted from said table on the basis of the resource used by the terminal for gaining access to the multiple access channel. The table in question is generated by the association member 53 on the basis of information read from a memory 54, said memory 54 comprising in particular the maximum and minimum power levels received by those terminals which are already in communication with said fixed station, the number of ranges over which the various power levels have been subdivided, etc. ... .

Naturally, other embodiments are possible. For example, the memory 54 can have the above-mentioned table directly, the essential point being that given knowledge of the resource used for obtaining access, the association member 53 can determine which useful item of information is being transmitted by the terminal.

The fixed station 50 also has a pilot signal generator 55, said pilot signal being applied to an amplifier 56 for broadcasting over a transmit antenna 57. The information stored in the memory 54 is applied to the pilot signal generator 55 so that said information can be transmitted over the pilot channel to the terminals. This serves firstly to ensure that the information stored in the fixed network corresponds exactly with the information transmitted by the terminals, and secondly to minimize any risk of collision on the multiple access channel, as obtained by using random access.

In a variant embodiment, the useful item of information UI is not identified in the fixed station but, instead, in the RNC. The member 53 of Figure 5 is then situated at the RNC and the member shown in Figure 5 acts transparently, i.e. it transmits directly to the RNC the access request as made by the terminal, or else in another possible embodiment, it transmits to the RNC information relating to the resource used for access purposes.

An embodiment of the RNC is shown in Figure 6. The RNC given overall reference 60 is connected to a plurality of fixed stations which it controls, and from each of the fixed stations it receives either the useful item of information UI as extracted at said fixed station, or else an indication of which resource was used for access purposes by a terminal, or indeed it receives the terminal access signal directly. A decision member 61 is provided either to process the useful item of information (e.g. for the purpose of implementing the CAC procedure), or to recognize the useful item of information in the signal which is supplied thereto by a fixed station and for making any appropriate decision based on knowledge of said useful item of information.

**Claims**

1. A method of selecting a transmission resource of a multiple access channel, said channel being shared between terminals (12, 13, 14, 40) for gaining access to a fixed station (10, 11, 50), said selection consisting in selecting, for the purpose of accessing said fixed station (10, 11, 50), a resource having at least two components, said resource being distinguishable from another resource by said fixed station (10, 11, 50) when at least one of its components differs from the components constituted by said other resource, the method being characterized in that it consists in selecting a resource in which at least one of said components corresponds unambiguously with a useful item of information (UI) for transmission to said fixed station (10, 11, 50).

2. A method according to claim 1, characterized in that at least one of the components of said resource is determined in random manner by said terminal (12, 13, 14, 40).

**3.** A method according to claim 1 or 2, characterized in that said components belong to one of the following groups:

- · time slots (IT);
- · frequencies (F); and
- · codes (C).

**4.** A method according to claim 3, characterized in that the components of a given resource are mutually orthogonal.

**5.** A method according to any one of claims 1 to 4, characterized in that said useful item of information (UI) to be transmitted to said fixed station (10, 11, 50) corresponds to the power level at which said terminal (12, 13, 14, 40) receives the pilot signal from said fixed station (10, 11, 50).

**6.** A method according to claim 5, characterized in that said at least one of said components corresponding unambiguously with said useful item of information (UI) for transmission to said fixed station (10, 11, 50) is selected from a list which is drawn up while taking account of the dynamic range of said pilot signal, in such a manner as to minimize the risk of collision on said multiple access channel.

**7.** A terminal (12, 13, 14, 40) including selector apparatus (41) for selecting a transmission resource of a multiple access channel, said channel being shared between terminals (12, 13, 14, 40) for gaining access to a fixed station (10, 11, 50), said selector apparatus (41) being suitable for selecting a resource having at least two components in order to gain access to said fixed station (10, 11, 50), said resource being distinguishable from another resource by said fixed station (10, 11, 50) when at least one of its components differs from those used by said other resource, the terminal being characterized in that said selector apparatus (41) selects a resource in which at least one of said components corresponds unambiguously with a useful item of information (UI) to be transmitted to said fixed station (10, 11, 50), said useful item of information (UI) being applied to said selector apparatus (41).

**8.** A terminal according to claim 7, characterized in that said useful item of information (UI) for transmission to said fixed station (10, 11, 50) corresponds to the power level at which said terminal (12, 13, 14, 40) receives a pilot signal from said fixed station (10, 11, 50).

**9.** A fixed station (10, 11, 50) of a communications network, said fixed station (10, 11, 50) being suitable for receiving signals transmitted by terminals (12, 13, 14, 40) over a multiple access channel, said channel being shared between a plurality of terminals (12, 13, 14, 40) for access to said fixed station (10, 11, 50), the fixed station being characterized in that it includes a member (53) for associating the resource used by each of said terminals (12, 13, 14, 40) for accessing said fixed station (10, 11, 50) with a corresponding useful item of information (UI).

**10.** A fixed station according to claim 9, characterized in that said resource comprises at least two components, said resource being distinguishable from another resource by said fixed station (10, 11, 50) when at least one of its components differs from the components used by said other resource.

**11.** A fixed station (10, 11, 50) according to claim 9 or 10, characterized in that said useful item of information (UI) corresponds to the power level at which the terminal (12, 13, 14, 40) using said resource for gaining access to said fixed station (10, 11, 50) has received a pilot signal as broadcast by said fixed station (10, 11, 50).

**12.** A radio network controller (15, 60) of fixed stations (10, 11, 50) in a cellular telecommunications network, said fixed stations (10, 11, 50) being designed to enter into communication with terminals (12, 13, 14, 40), the controller being characterized in that it includes a member (61) for associating the resource used by each of said terminals (12, 13, 14, 40) for gaining access to one of said fixed stations (10, 11, 50) with a corresponding useful item of information (UI).

FiG. 1

FiG. 2

**FIG.3**

| UI | IT | C | F |
|---|---|---|---|
| UI 1 | IT1 | PN1 | F1 |
| UI 2 | IT2 | PN1 | F1 |
| UI 3 | IT3 | PN1 | F1 |
| UI 4 | IT1 | PN2 | F1 |
| UI 5 | IT2 | PN2 | F1 |
| UI 6 | IT3 | PN2 | F1 |
| UI 7 | IT1 | PN3 | F1 |
| UI 8 | IT2 | PN3 | F1 |
| UI 9 | IT3 | PN3 | F1 |
| UI 10 | IT1 | PN4 | F1 |
| UI 11 | IT2 | PN4 | F1 |
| UI 12 | IT3 | PN4 | F1 |
| UI 13 | IT1 | PN1 | F2 |
| UI 14 | IT2 | PN1 | F2 |
| UI 15 | IT3 | PN1 | F2 |
| UI 16 | IT1 | PN2 | F2 |
| UI 17 | IT2 | PN2 | F2 |
| UI 18 | IT3 | PN2 | F2 |
| UI 19 | IT1 | PN3 | F2 |
| UI 20 | IT2 | PN3 | F2 |
| UI 21 | IT3 | PN3 | F2 |
| UI 22 | IT1 | PN4 | F2 |
| UI 23 | IT2 | PN4 | F2 |
| UI 24 | IT3 | PN4 | F2 |

FIG. 4

FIG. 5

FiG.6

Ui

EP 1 102 512 A1

**European Patent Office**

**EUROPEAN SEARCH REPORT**

Application Number

EP 99 44 0324

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 796 726 A (HASSAN AMER ET AL) 18 August 1998 (1998-08-18) * column 5, line 50 - column 6, line 33 * * column 11, line 53 - column 12, line 7 * * column 13, line 1 - line 27 * * figure 12 * | 1-12 | H04Q7/38 |
| A | US 5 806 003 A (JOLMA PETRI ET AL) 8 September 1998 (1998-09-08) * column 3, line 7 - column 4, line 54 * | 1-12 | |
| E | WO 99 60812 A (ERICSSON INC) 25 November 1999 (1999-11-25) * page 5, line 29 - page 8, line 12 * * page 11, line 28 - page 12, line 12 * * page 13, line 16 - line 28 * * figure 9 * | 1-3,7,9, 10,12 | |

TECHNICAL FIELDS SEARCHED (Int.Cl.7)

H04Q

The present search report has been drawn up for all claims

| Place of search | Date of completion of the search | Examiner |
|---|---|---|
| THE HAGUE | 12 April 2000 | Pecci, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

13

## ANNEX TO THE EUROPEAN SEARCH REPORT
## ON EUROPEAN PATENT APPLICATION NO.　　　　　　EP 99 44 0324

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2000

| Patent document cited in search report | | Publication date | Patent family member(s) | | Publication date |
|---|---|---|---|---|---|
| US 5796726 | A | 18-08-1998 | AU | 716144 B | 17-02-2000 |
| | | | AU | 2439397 A | 29-10-1997 |
| | | | CA | 2247356 A | 16-10-1997 |
| | | | CN | 1215513 A | 28-04-1999 |
| | | | EP | 0893012 A | 27-01-1999 |
| | | | WO | 9738502 A | 16-10-1997 |
| US 5806003 | A | 08-09-1998 | FI | 933209 A | 15-01-1995 |
| | | | AU | 683276 B | 06-11-1997 |
| | | | AU | 7126594 A | 13-02-1995 |
| | | | CN | 1127057 A,B | 17-07-1996 |
| | | | EP | 0709016 A | 01-05-1996 |
| | | | WO | 9502950 A | 26-01-1995 |
| | | | JP | 9500248 T | 07-01-1997 |
| | | | NO | 960154 A | 12-01-1996 |
| WO 9960812 | A | 25-11-1999 | US | 6014562 A | 11-01-2000 |
| | | | AU | 3644799 A | 06-12-1999 |

EPO FORM P0459

For more details about this annex : see Official Journal of the European Patent Office, No. 12/82